# EUROPEAN PATENT APPLICATION

(11) **EP 4 841 614 A1**
(43) Date of publication of application: **18.11.2026**
(21) Application number: 25738432.1
(22) Date of filing: 08.01.2025
(51) Int. Cl.: G09F 9/37, H02S 40/38

(54) **SOLAR ELECTRONIC PAPER DISPLAY DEVICE**

(30) Priority: 08.01.2024 CN 202410028417
(71) Applicant: Hanshow Technology Co., Ltd., Jiaxing, Zhejiang 314031 (CN)
(72) Inventor: ZHAO, Ziming, Jiaxing, Zhejiang 314031 (CN); LI, Yanchen, Jiaxing, Zhejiang 314031 (CN); WANG, Yanwei, Jiaxing, Zhejiang 314031 (CN); ZHAO, Jianguo, Jiaxing, Zhejiang 314031 (CN)
(74) Representative: Boult Wade Tennant LLP
(86) International application number: PCT/CN2025/071172
(87) International publication number: WO 2025/148903

(57) **Abstract**

Disclosed by the present disclosure is a solar-powered electronic paper display device, in which a system-in-package chip integrates and encapsulates an MCU module and an NFC module, and a solar assembly integrates both a solar cell and an NFC antenna, and the NFC antenna is prepared by using electrodes outside an effective power generation area of the solar cell; the solar assembly is configured to collect electrical power; a circuit board is configured to receive an electronic paper display instruction sent by an external system and forward to the MCU module, collect the electrical power transmitted from the solar cell and store in an energy storage device, or collect alternating-current electrical power transmitted from the NFC antenna and send to the NFC module; the NFC module is configured to convert the alternating-current electrical power into direct-current electrical power and store in the energy storage device; the MCU module is configured to parse commodity information in the electronic paper display instruction; and an electronic paper module is configured to display the commodity information.

## Description

### RELATED APPLICATION

The present disclosure claims priority to Chinese Patent Application NO. 202410028417.2 filed on January 08, 2024, which is hereby incorporated by reference in its entirety.

### TECHNICAL FIELD

The present disclosure relates to the technical field of electronic shelf label display, and particularly to a solar-powered electronic paper display device.

### BACKGROUND

This section is intended to provide background or context for embodiments of the present disclosure set forth in the claims. The description here is not admitted to be the prior art just because it is included in this section.

An electronic paper display device is generally powered by a primary battery, which requires regular battery replacement to maintain normal product operation. Such a power supply mode has the drawbacks of poor safety performance, high cost and environmental unfriendliness. In other scenarios, Near Field Communication (NFC) technology is adopted for communication or charging of electronic products. Due to limited internal space and electromagnetic interference, NFC coils usually need to be arranged independently of the product or mounted on a Printed Circuit Board (PCB). This leads to excessive overall size of the electronic product or waste of a significant portion of PCB area, which further increases manufacturing costs. Specifically, several configurations of electronic paper have been disclosed in the prior art.

First configuration: a photovoltaic panel is used as a power supply unit of the electronic paper. Such electronic paper can only be used in scenarios with sufficient illumination reaching a specified intensity, and the strict requirements for the photovoltaic panel and light conditions severely limit the practical application of the product. The solar cell adopted in the electronic paper is a silicon-based solar cell, which can generate power efficiently only under sunlight to supply power to a display module. Most display modules are used indoors, and the indoor light spectrum differs greatly from that of sunlight. Under such conditions, the power output of silicon-based solar cells drops drastically, which significantly affects the performance of the display module.

Second configuration: an NFC coil of the electronic shelf label is mounted on the PCB. To avoid shielding and electromagnetic interference from the circuit, the NFC coil often needs to be arranged on the outermost periphery of the PCB. In other scenarios, two coils are disposed on the PCB to improve the space utilization of the PCB, yet this complicates the design. Accordingly, conventional NFC designs tend to waste a large amount of PCB area and thus increase manufacturing costs.

Third configuration: the electronic shelf label is provided with two electronic paper displays to avoid circuit interference. However, the electronic paper display is a highest-cost component. Adopting two electronic paper displays merely to cut PCB costs leads to a sharp rise in overall costs and further complicates circuit design.

Accordingly, there is currently a lack of an electronic paper with simple circuit layout, superior performance and cost savings.

### SUMMARY

Embodiments of the present disclosure provide a solar-powered electronic paper display device, which can significantly reduce the size of a circuit board, greatly lower product costs and improve product performance. The device includes a solar assembly, an electronic paper module, a circuit board, a system-in-package chip and an energy storage device, and the system-in-package chip integrates and encapsulates an MCU module and an NFC module,
the solar assembly integrates both a solar cell and an NFC antenna, and the NFC antenna is prepared by using an electrode outside an effective power generation area of the solar cell;
visible areas of the solar assembly and the electronic paper module do not block each other;
the solar assembly is configured to collect and convert solar energy into electrical power;
the circuit board is configured to receive an electronic paper display instruction sent by an external system and forward the electronic paper display instruction to the MCU module; collect the electrical power transmitted from the solar cell and store the electrical power in the energy storage device, or collect alternating-current electrical power transmitted from the NFC antenna and send the alternating-current electrical power to the NFC module; and deliver the electrical power from the energy storage device to the electronic paper module and the system-in-package chip according to a power consumption requirement;
the NFC module is configured to convert the alternating-current electrical power into direct-current electrical power and store the direct-current electrical power in the energy storage device;
the MCU module is configured to parse commodity information in the electronic paper display instruction and send the commodity information to the electronic paper module;
the electronic paper module is configured to display the received commodity information; and
the energy storage device is configured to store electrical power.

In the embodiments of the present disclosure, compared with conventional solutions that adopt a photovoltaic panel, an NFC coil of an electronic shelf label being mounted on a PCB, and two separate electronic paper displays, the present disclosure firstly proposes a technical solution of integrating an NFC antenna on a solar cell. This technical solution can save a large amount of circuit board area originally occupied by an independent NFC antenna, greatly improve space utilization efficiency and significantly cut circuit board costs. The NFC antenna is manufactured using electrodes outside the effective power generation area of the solar cell. In the conventional manufacturing process of solar cells, such electrodes need to be removed through an additional edge cleaning process (excess film layers are removed by laser edge cleaning or mechanical edge cleaning). In contrast, the technical solution of the present disclosure only requires a simple etching process to effectively reuse residual electrode materials. There is no need to pattern an NFC antenna on high-cost circuit boards for electronic paper products, which simplifies the overall manufacturing process and maximizes the utilization of internal space and electrode materials. Accordingly, low-cost preparation of the NFC antenna is achieved. Since the NFC antenna is integrated with the solar cell, it is generally disposed above or on one side of the solar-powered electronic paper display device. The position of the NFC antenna well avoids circuit structures of the inner structure of the solar-powered electronic paper display device, such as Thin Film Transistors (TFTs), so that signal interference from these structures can be prevented. In addition, the physical communication distance when an NFC terminal approaches the NFC antenna is optimized, thereby improving communication performance. Energy transmission is performed around the energy storage device, which significantly expands the applicable scenarios of electronic products. On the basis of the present disclosure, by calculating power consumption of loads under different scenarios and selecting appropriate solar cells and energy storage devices, and matching with the NFC antenna, electronic products can achieve long-term sustainable operation without various limitations of primary batteries and operate normally in various occasions. The energy management mode possesses universal applicability.

### BRIEF DESCRIPTION OF DRAWINGS

In order to more clearly illustrate the technical solutions in the embodiments of the present disclosure or in the prior art, the drawings to be used in the description of the embodiments or the prior art will be briefly introduced below. Obviously, the drawings involved in the following description only illustrate some embodiments of the present disclosure, and other drawings can be obtained by those of ordinary skill in the art according to these drawings without paying any inventive work. In the drawings:
FIG. 1 illustrates a schematic structural diagram (side view) of a solar-powered electronic paper display device according to an embodiment of the present disclosure;
FIG. 2 illustrates a schematic diagram of energy supply of a solar-powered electronic paper display device according to an embodiment of the present disclosure;
FIG. 3 illustrates a schematic structural diagram (top view) of a solar-powered electronic paper display device according to an embodiment of the present disclosure;
FIG. 4 illustrates a schematic diagram of an internally cascaded structure of a solar cell according to an embodiment of the present disclosure;
FIG. 5 illustrates a schematic diagram of an internally cascaded structure of a solar cell in a solar-powered electronic paper display device;
FIG. 6 illustrates a schematic structural diagram of a cover plate according to an embodiment of the present disclosure;
FIG. 7 illustrates a schematic diagram of an internally cascaded structure of a solar cell according to another embodiment of the present disclosure;
FIG. 8 illustrates a schematic structural diagram of a cover plate according to another embodiment of the present disclosure;
FIG. 9 illustrates a schematic structural diagram (side view) of a solar-powered electronic paper display device according to another embodiment of the present disclosure;
FIG. 10 illustrates a schematic diagram of an internally cascaded structure of a solar cell according to another embodiment of the present disclosure;
FIG. 11 illustrates a schematic structural diagram of a cover plate according to another embodiment of the present disclosure;
FIG. 12 illustrates a schematic structural diagram (side view) of a solar-powered electronic paper display device according to another embodiment of the present disclosure;
FIG. 13 illustrates a schematic structural diagram (top view) of a solar-powered electronic paper display device according to another embodiment of the present disclosure;
FIG. 14 illustrates a schematic diagram of an internally cascaded structure of a solar cell according to another embodiment of the present disclosure; and
FIG. 15 illustrates a schematic structural diagram of a cover plate according to another embodiment of the present disclosure.

### DESCRIPTION OF EMBODIMENTS

In order that the objectives, technical solutions and advantages of the embodiments of the present disclosure are clearer, the embodiments of the present disclosure will be further described below in detail with reference to the drawings. Herein, the exemplary embodiments of present disclosure and the descriptions thereof are used to explain the present disclosure, but should not be used as limitations thereto.

### Glossary of Abbreviations and Key Terms

EPD: Electronic Ink Screen/Electronic Paper Display;
NFC: Near Field Communication;
PCB: Printed Circuit Board;
FPC: Flexible Printed Circuit;
SIP: System-in-Package;
OPV: Organic Photovoltaic Cell;
DSC: Dye-Sensitized Solar Cell;
MCU: Microcontroller Unit;
TFT: Thin Film Transistor; and
ESL: Electronic Shelf Label.

The electronic shelf labels in the embodiments of the present disclosure refer to electronic commodity price tags commonly used in supermarkets. Such electronic shelf labels can display commodity information and switch display pages, and some are provided with LED lamps to indicate specific information via flickering, steady illumination, and the like. The solar cell integrated NFC solution proposed by the present disclosure possesses universal applicability. Circuit designs adopting similar NFC technology for other types of solar-powered electronic products shall fall within the scope of the present disclosure.

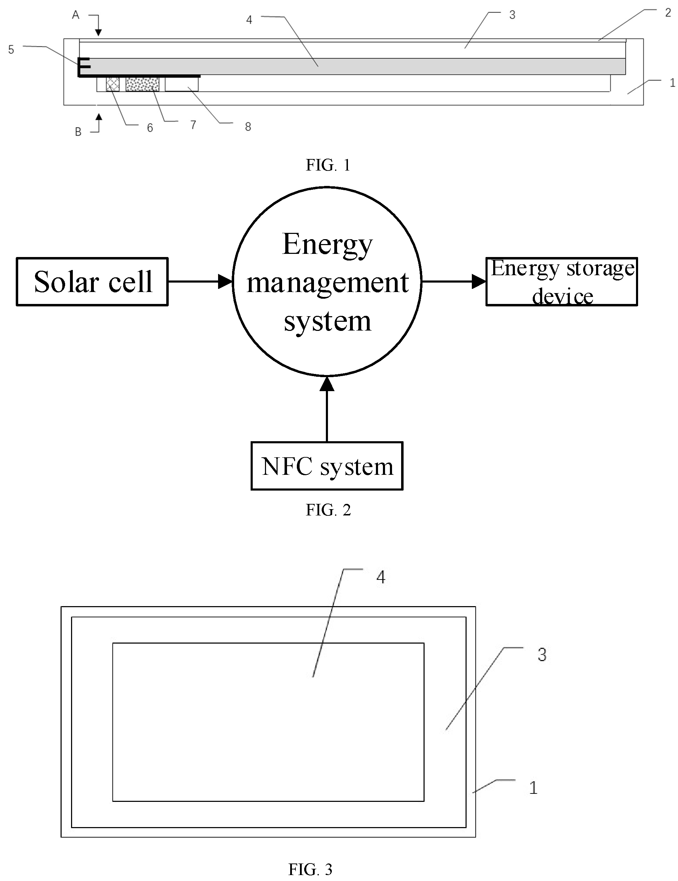

FIG. 1 illustrates a schematic structural diagram (side view) of a solar-powered electronic paper display device according to an embodiment of the present disclosure, including:
a solar assembly 3, an electronic paper module 4, a circuit board 5, a system-in-package chip 6 and an energy storage device 7; the system-in-package chip 6 integrates and encapsulates a Microcontroller Unit (MCU) module and a Near Field Communication (NFC) module;
the solar assembly 3 integrates both a solar cell and an NFC antenna, and the NFC antenna is prepared by using an electrode outside an effective power generation area of the solar cell;
visible areas of the solar assembly 3 and the electronic paper module 4 do not block each other;
the solar assembly 3 is configured to collect and convert solar energy into electrical power;
the circuit board 5 is configured to receive an electronic paper display instruction sent by an external system and forward the electronic paper display instruction to the MCU module; collect the electrical power transmitted from the solar cell and store the electrical power in the energy storage device, or collect alternating-current electrical power transmitted from the NFC antenna and send the alternating-current electrical power to the NFC module; and deliver the electrical power from the energy storage device to the electronic paper module 4 and the system-in-package chip 6 according to a power consumption requirement;
the NFC module is configured to convert the alternating-current electrical power into direct-current electrical power and store the direct-current electrical power in the energy storage device 7;
the MCU module is configured to parse commodity information in the electronic paper display instruction and send the commodity information to the electronic paper module 4;
the electronic paper module 4 is configured to display the received commodity information; and
the energy storage device 7 is configured to store electrical power.

In the embodiments of the present disclosure, the NFC module is further configured for communication to achieve communication between the device and an external system. The NFC module may be integrated into the system-in-package chip, or provided as a discrete component and separately mounted on the circuit board to perform its functions.

The system-in-package chip 6 performs intelligent control and data processing.

In an embodiment, the device further includes an energy management system 8;
the circuit board 5 is configured to transmit the electric power transmitted from the solar cell to the energy management system 8;
the NFC module is configured to transmit the direct-current electric power to the energy management system 8;
the energy management system 8 includes a converter, a voltage regulator, a safety monitoring module and a charging controller,
the converter is configured to convert the electrical power according to an energy storage requirement of the energy storage device, wherein the conversion is a boost conversion or a buck conversion;
the voltage regulator is configured to stabilize the converted electrical power and transmit the stabilized electrical power to the energy storage device 7;
the safety monitoring module is configured to perform safety monitoring on the electrical power input to the energy management system 8; and
the charging controller is configured to protect internal circuits of the energy storage device 7 and the energy management system 8, and the protection includes one or any combination of overcharge prevention, overdischarge prevention and reverse current prevention.

In the present embodiment, the converter may be a Direct Current to Direct Current (DC-DC) converter and/or a Low Dropout Linear (LDO) converter. The energy management system 8 realizes real-time electrical power regulation and energy optimization through data analysis. The DC-DC converter, the LDO converter, the voltage regulator, the safety monitoring module and the charging controller are composed of basic components, and the basic components include resistors, inductors, capacitors, diodes and triodes, to realize the functions of the above modules in the circuit.

In an embodiment, the device further includes a housing 1;
the housing 1 is configured to support the device, and a first face of the housing directly faces illumination and the first face is empty or provided with a transparent cover plate 2; and
when provided, the transparent cover plate 2 is connected to the first face of the housing via adhesive bonding or snap-fit connection, and is configured to protect the solar assembly 3 and the electronic paper module 4.

In the present embodiment, the electronic paper module 4 includes:
a driving chip configured to drive an electronic paper display module for display according to the received electronic paper display instruction; and
the electronic paper display module configured to display content.

The circuit board 5 includes:
an electronic paper module main control circuit configured to receive the electronic paper display instruction sent by an external system and forward the electronic paper display instruction to the MCU module; and
a power management circuit configured to collect the electrical power transmitted from the solar cell and store the electrical power in the energy storage device, or collect the alternating-current electrical power transmitted from the NFC antenna and send the alternating-current electrical power to the NFC module; and transmit the electrical power stored in the energy storage device to the electronic paper module 4 and the system-in-package chip 6 according to the power consumption requirement.

In an embodiment, the circuit board 5 is connected to the solar assembly 3 and the electronic paper module 4 respectively via a Flexible Printed Circuit (FPC), and is further connected to the energy storage device 7, the energy management system 8 and the system-in-package chip 6.

FIG. 2 illustrates a schematic diagram of energy supply of a solar-powered electronic paper display device according to an embodiment of the present disclosure. The overall energy demand of the device, including the energy demand under an operating state and a standby state, is met by an energy storage device. The energy of the energy storage device is supplied from a solar cell and an NFC module, and the NFC module converts alternating-current electrical power from the NFC antenna into direct-current electrical power. Under an ideal operating mode, the energy consumed by the device is supplied by the energy storage device, and the energy supplied by the solar cell is not less than that consumed by the device, so as to realize energy self-consistency of the whole device. When the solar-powered electronic paper display device is placed in a dark environment for a long time or the light intensity is too weak to support energy self-consistency of the whole device, or when short-time rapid charging of the solar-powered electronic paper display device is required, the NFC module can be used to realize rapid wireless charging via an NFC communication link.

FIG. 3 illustrates a schematic structural diagram (top view) of a solar-powered electronic paper display device according to an embodiment of the present disclosure, in which visible areas of a solar assembly and am electronic paper module do not block each other, so that space can be utilized efficiently.

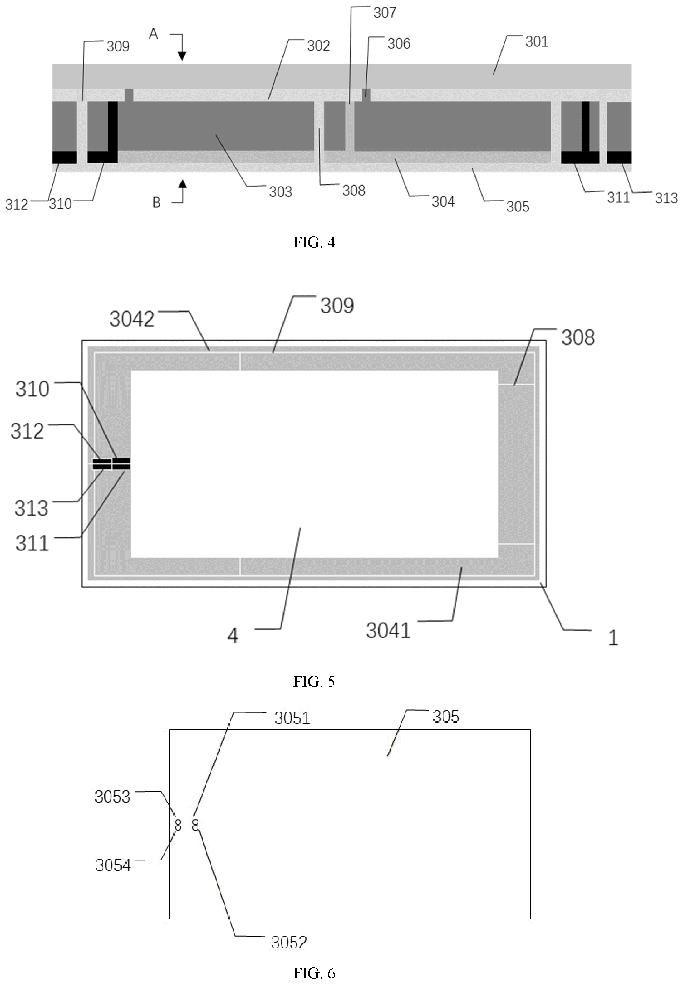

FIG. 4 illustrates a schematic diagram of an internally cascaded structure of a solar cell according to an embodiment of the present disclosure, in which a solar cell is cut and connected in series via laser etching or mechanical scribing, so as to control output current and voltage of a solar assembly.

In an embodiment, the solar cell includes:
a substrate 301 configured to support and protect the solar cell and allow light to pass therethrough; the material thereof may be glass, plastic or any other transparent material;
a cover plate 305 configured to protect the solar cell; considering that the main application scenarios of the product are indoor environments, a combination of water and oxygen barrier films (e.g., 3M composite films) and ultraviolet (UV) adhesive is selected as an example; combinations of water and oxygen barrier materials and cover glass are also available, such as ethylene vinyl acetate (EVA)/glass, polyvinyl butyral (PVB)/glass, thermoplastic silicone elastomer (TPSE)/glass, polyolefin elastomer (POE)/glass, etc.;
a solar cell functional layer 303 configured to generate electrical power by absorbing light energy; depending on the cell category, this functional layer may adopt various types, such as an N-type semiconductor layer/a P-type semiconductor layer, a carrier transport layer/a light absorption layer/a carrier transport layer, a nanoporous semiconductor layer/a dye-sensitized layer and a redox electrolyte, or other structures;
a transparent conductive layer 302 configured to transmit the electrical power of the solar cell, and may adopt, for example, metal oxide thin films such as indium tin oxide, fluorine-doped tin oxide, tungsten-doped indium tin oxide and iridium-cobalt mixed oxide, while graphene, metal nanowires, carbon nanotubes, or metal thin films (e.g., silver, copper, gold and aluminum thin films) are also applicable;
a first electrode layer 3041 configured to transmit the electrical power of the solar cell, and may adopt, for example, metal electrodes such as silver, gold, copper and aluminum electrodes, while metal alloys, graphene, metal nanowires, carbon nanotubes, etc. are also available, and the first electrode layer 3041 is a part of an electrode layer 304 illustrated in FIG. 4;
a first division 306 configured to cut the transparent conductive layer 302 via laser etching, with a line width ranging from 20 µm to 120 µm;
a second division 307 configured to cut the solar cell functional layer 303 via laser etching, with a line width ranging from 20 µm to 120 µm;
a third division 308 configured to cut the solar cell functional layer 303 and the electrode layer 304 via laser etching or mechanical scribing;
a fourth division 309 configured to separate the transparent conductive layer 302, the solar cell functional layer 303 and the electrode layer 304 from an edge via laser etching or mechanical scribing, with a line width ranging from 20 µm to 200 µm; and
a first electrode 310 and a second electrode 311, which serve as total electrodes of the internally cascaded solar cell and configured to connect the solar cell to the circuit board 5, and the first electrode 310 and the second electrode 311 have opposite polarities, either of which can serve as a positive electrode or a negative electrode, and the two electrodes adopt the same preparation process and materials.

In an embodiment, an NFC antenna is prepared by using a laser etching process on the electrodes outside the effective power generation area of the solar cell. In the present embodiment, an etching pattern required for the laser etching process is programmed in a laser device.

FIG. 5 illustrates a schematic diagram of an internally cascaded structure of a solar cell in a solar-powered electronic paper display device, and corresponds to View B in FIGS. 1 and 4. For ease of understanding, the cover plate 305 is not illustrated in FIG. 5, and the present structure includes the solar cell and the NFC antenna.

In an embodiment, the NFC antenna includes:
a second electrode layer 3042 which serves as a coil portion of the NFC antenna and configured to perform near-field coupling communication; and
a third electrode 312 and a fourth electrode 313 which serve as a positive electrode or a negative electrode of the NFC antenna, and the third electrode 312 and the fourth electrode 313 have opposite polarities.

The third electrode 312 and the fourth electrode 313 adopt the same preparation process and materials as the first electrode 310 and the second electrode 311.

FIG. 6 illustrates a schematic structural diagram of a cover plate according to an embodiment of the present disclosure, and corresponds to View B in FIGS. 1 and 4.

In an embodiment, the cover plate 305 is provided with a first through hole 3051, a second through hole 3052, a third through hole 3053 and a fourth through hole 3054,
the first through hole 3051 is configured as a passage for the first electrode 310 to the circuit board 5;
the second through hole 3052 is configured as a passage for the second electrode 311 to the circuit board 5;
the third through hole 3053 is configured as a passage for the third electrode 312 to the circuit board 5; and
the fourth through hole 3054 is configured as a passage for the fourth electrode 313 to the circuit board 5.

The above four through holes are formed via laser drilling or mechanical drilling.

In an embodiment, the cover plate 305 is provided with drilled holes, each aligned with one of the electrodes on the solar assembly 3, i.e., the first electrode 310, the second electrode 311, the third electrode 312 and the fourth electrode 313.

Several specific embodiments are provided below to illustrate the practical applications of the method proposed by the present disclosure.

### Embodiment 1

The main structure of the present embodiment is illustrated in FIG. 1. The housing 1 is formed of engineering plastic (Acrylonitrile Butadiene Styrene, ABS), and the transparent cover plate 2 is formed of acrylic (polymethyl methacrylate, PMMA). The transparent material allows light to pass therethrough, so that display content of the electronic paper display can be seen from the outside, and sufficient light intake is provided for the solar assembly. The solar cell is a perovskite solar cell. In the present embodiment, the electronic paper module adopts a 2.66-inch electronic paper display. In the present embodiment, the energy storage device 7 adopts a lithium iron phosphate pouch cell.

The operating modes of the present embodiment are divided into two types: an operating state and a standby state. As illustrated in FIG. 2, the usage scenarios of the present embodiment can be divided into two categories, i.e., those with favorable illumination conditions and those with unfavorable illumination conditions. Under an ideal operating mode (e.g., the device is applied in a supermarket with business hours from 10:00 to 22:00 and rest hours from 22:00 to 10:00 of the next day): for scenarios with favorable illumination conditions, i.e., the business hours, energy consumed by the device (in either the operating state or the standby state) is supplied by the energy storage device, and the solar cell supplements energy not less than the energy consumed by the device; for scenarios with unfavorable illumination conditions, i.e., the rest hours, consumed energy (in either the operating state or the standby state) is also supplied by the energy storage device; at this time, the solar cell cannot supplement sufficient energy to offset the energy loss of the energy storage device; afterwards, when the illumination condition returns to a favorable state, i.e., when business resumes, the solar cell normally supplies power to the energy storage device; as a result, while meeting the real-time energy consumption of the device, the solar cell can also supplement the energy consumed by the device during the period of unfavorable illumination conditions, so as to realize energy self-consistency of the entire device. Under non-ideal operating conditions, such as when the device is placed in a dark environment for a long time or the light intensity is too weak to support the energy self-consistency of the whole device, or when short-time rapid charging of the device is required (corresponding scenarios include the device being left in a dark corner, or the supermarket being closed for a long time without illumination during long holidays), the charge level of the energy storage device needs to be quickly replenished to rapidly recover the operating capacity of the device; a handheld terminal such as a mobile phone with an NFC function may be brought close to the device, and a rapid wireless charging process can be realized via an NFC communication link. In other scenarios, for instance, when the handheld terminal needs to send a specific instruction to the device or obtain information therefrom, a handheld terminal such as a mobile phone with an NFC function may also be brought close to the device to perform information transmission via the NFC communication link.

The solar assembly of the present embodiment has a homocentric squares-shaped structure as illustrated in FIG. 3, and the solar cell is a perovskite solar cell. The visible area of the electronic paper module 4 measures 60.1 mm × 30.7 mm. The visible areas of the solar assembly and the electronic paper module do not block each other, so that space can be utilized effectively. The solar cell adopts an internally cascaded structure. The solar cell is cut and connected in series via laser etching or mechanical scribing, so as to control output current and voltage of the solar assembly, and laser etching is adopted in the present embodiment. A side view of the solar assembly is illustrated in FIG. 4. In the present embodiment, the substrate 301 is glass; the transparent conductive layer 302 adopts indium tin oxide; the solar cell functional layer 303 adopts a perovskite solar cell, and its functional layer structure from the transparent conductive layer 302 toward the electrode layer 304 sequentially includes an electron transport layer, a perovskite layer and a hole transport layer. Copper (Cu) is adopted for the electrode layer 304. Considering that the main application scenarios of the product are indoor environments, the cover plate 305 is formed by combining a 3M water and oxygen barrier film with UV adhesive. The first division 306 is formed via laser etching to cut the transparent conductive layer 302, with a pitch of 40 µm. The second division 307 is formed via laser etching to cut the solar cell functional layer 303, with a pitch of 75 µm. The third division 308 is formed via laser etching to cut both the solar cell functional layer 303 and the electrode layer 304, with a pitch of 100 µm. The fourth division 309 is formed via laser etching to separate the transparent conductive layer 302, the solar cell functional layer 303 and the electrode layer 304 of the solar cell from an edge, with a pitch of 100 µm. In the present embodiment, the first electrode 310 serves as the positive electrode of the solar cell; the second electrode 311 serves as the negative electrode of the solar cell; the third electrode 312 serves as the positive electrode of the NFC antenna; and the fourth electrode 313 serves as the negative electrode of the NFC antenna. The four electrodes adopt the same preparation process and materials as the electrode layer 304. For example, the four electrodes can be prepared by vacuum evaporation with a film thickness of 100 nm.

The top view of the four electrodes and the electrode layer 304 can be seen with reference to FIG. 5, and the line width of the second electrode layer 3042 is 3 mm. The circuit of the solar cell and the circuit of the NFC antenna are separated by the fourth division 309 formed via laser etching. The fourth division 309 provides reliable electrical insulation between the circuits. Accordingly, even though the two circuits are densely laid out, the space utilization rate is no less than 99%, and the two circuits do not interfere with each other. The solar cell and the NFC antenna are then encapsulated by the cover plate 305. The encapsulation material covers the whole solar cell and fills the etched trenches of the third division 308 and the fourth division 309 to isolate water vapor and oxygen. Laser drilling is performed at the positions where the four electrodes extend outward to expose the electrodes, and these electrodes can then be connected to an external circuit via silver paste dispensing, lead soldering, physical contact or other equivalent means. As illustrated in FIG. 6, the present embodiment adopts a combination of a 3M water and oxygen barrier film and UV adhesive as the cover plate for encapsulation. After the deposition of the electrode layer 304 and the formation of the third division 308 and the fourth division 309, UV adhesive is coated, then the 3M water and oxygen barrier film is laminated thereon, and ultraviolet irradiation curing is subsequently carried out to complete the encapsulation of the solar cell module. All through holes are formed via laser drilling.

### Embodiment 2

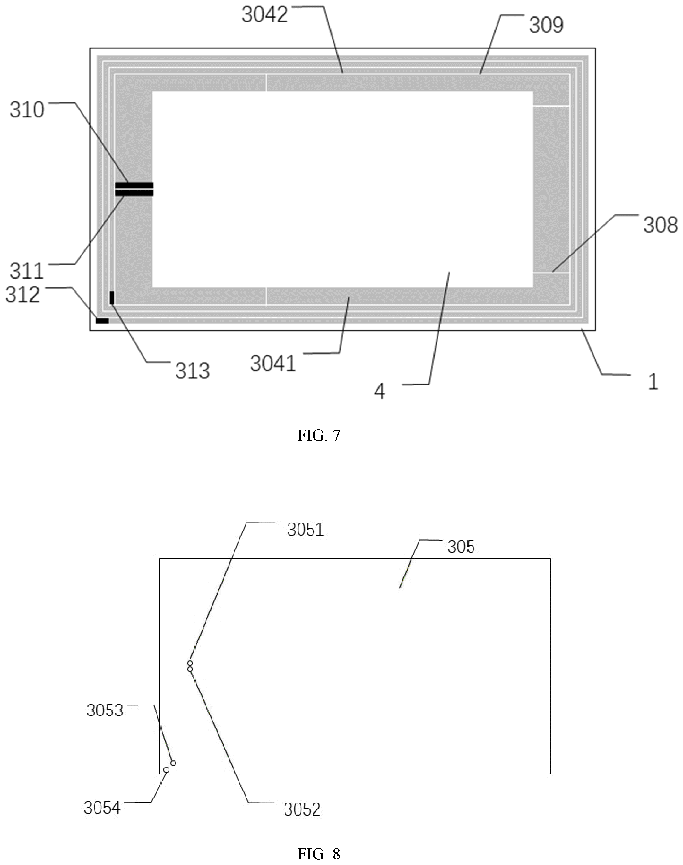

The second electrode layer 3042 is a multi-turn coil. FIG. 7 illustrates a schematic diagram of an internally cascaded structure of a solar cell according to another embodiment of the present disclosure. In FIG. 7, the second electrode layer 3042 is a 3-turn coil to enhance the anti-interference capability of the near-field communication link, and the number of coil turns can be adjusted according to the inductance requirement of the NFC antenna. The line width of the second electrode layer 3042 for near-field coupling communication is designed to be 6 mm. FIG. 8 illustrates a schematic structural diagram of a cover plate according to another embodiment of the present disclosure, in which the cover plate encapsulates the solar cell and the NFC antenna, while through holes are reserved for the four electrodes to connect to an external circuit.

### Embodiment 3

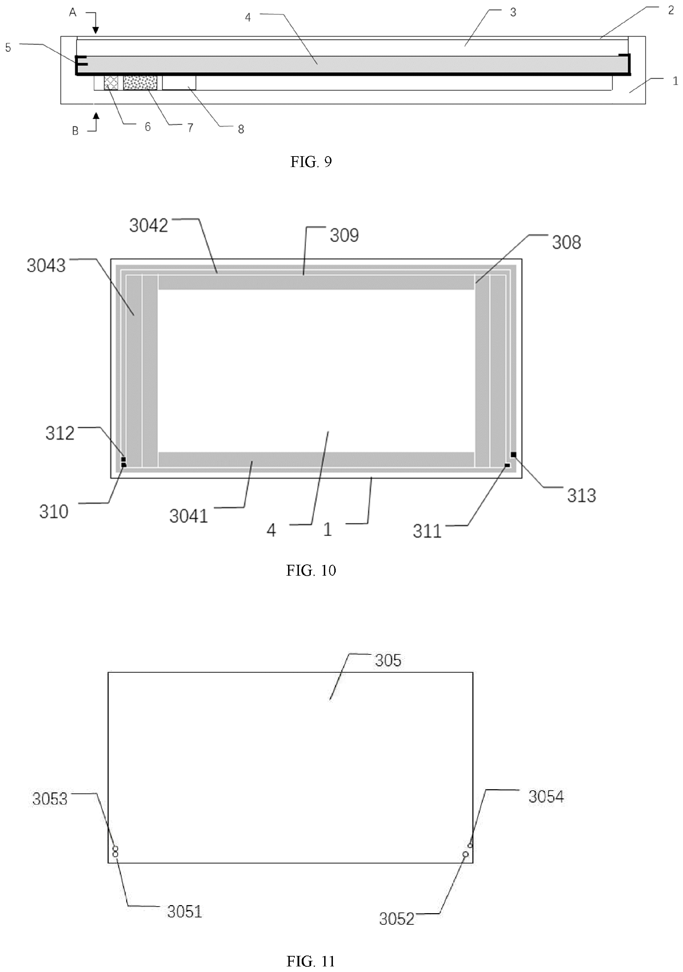

FIG. 9 illustrates a schematic structural diagram (side view) of a solar-powered electronic paper display device according to another embodiment of the present disclosure, FIG. 10 illustrates a schematic diagram of an internally cascaded structure of a solar cell according to another embodiment of the present disclosure, and FIG. 11 illustrates a schematic structural diagram of a cover plate according to another embodiment of the present disclosure.

FIG. 9 differs from FIG. 1 in that the circuit board 5 needs to extend to a position connectable to the electrodes in the solar assembly 3, so as to connect the electrodes of the solar cell and the electrodes of the NFC antenna in the solar assembly 3 to corresponding components. In FIG. 10, the NFC antenna adopts a multi-turn coil composed of the second electrode layer 3042 to enhance the anti-interference capability of the near-field communication link, and the number of coil turns can be adjusted according to the inductance requirement of the NFC antenna. In Embodiment 1 and Embodiment 2, electrons are transmitted along the electronic paper module 4 from the first electrode 310 (or the second electrode 311) to the second electrode 311 (or the first electrode 310), and the third division 308 cuts the solar cell functional layer 303 and the electrode layer 304. However, in the present embodiment, the first electrode layer 3041 and the third electrode layer 3043 are portions of the electrode layer 304 configured to transmit electric power on the solar assembly, and an area of the first electrode layer 3041 is twice that of the third electrode layer 3043. Electrons are transmitted in left and right directions as illustrated from the first electrode 310 (or the second electrode 311) to the second electrode 311 (or the first electrode 310). In the present embodiment, the second electrode layer 3042 serves as the coil portion of the NFC antenna for near-field coupling communication, with a line width designed to be 4 mm. The layout strategy and the internally cascaded structure design of the solar cell provided by the present disclosure have general applicability. Accordingly, a compatible internally cascaded structure of the solar cell and an NFC coil layout can be customized in accordance with actual power consumption requirements or dimensional specifications of the electronic paper display.

In FIG. 11, while the solar cell and the NFC antenna are encapsulated, through holes are reserved for the first electrode 310, the second electrode 311, the third electrode 312 and the fourth electrode 313 to connect to an external circuit.

### Embodiment 4

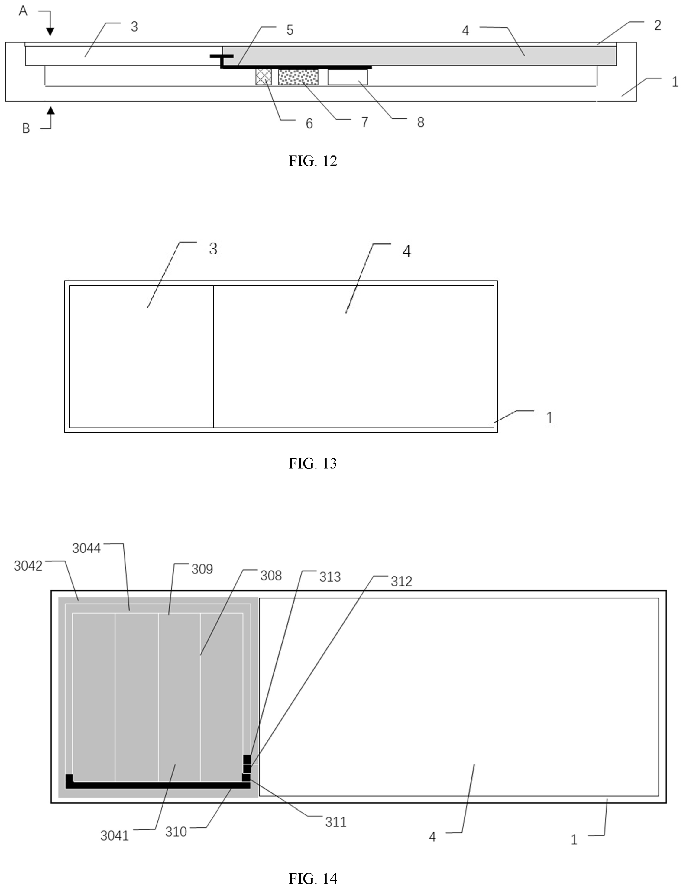

FIG. 12 illustrates a schematic structural diagram (side view) of a solar-powered electronic paper display device according to another embodiment of the present disclosure. The housing 1 is formed of engineering plastic (ABS), and the transparent cover plate 2 is formed of acrylic (polymethyl methacrylate, PMMA). The transparent material allows light to pass therethrough, so that display content of the electronic paper display can be seen from the outside, and sufficient light intake is provided for the solar assembly. The solar cell is an organic solar cell. The electronic paper display module adopts a 2.66-inch electronic paper display, and the energy storage device adopts a lithium iron phosphate pouch cell.

The operating modes of the present embodiment are divided into two types: an operating state and a standby state. As illustrated in FIG. 2, the usage scenarios of the present embodiment can be divided into two categories, i.e., those with favorable illumination conditions and those with unfavorable illumination conditions. Under an ideal operating mode: for scenarios with favorable illumination conditions (e.g., an office in business hours), the energy consumed by the solar-powered electronic paper display (in either the operating state or the standby state) is supplied by the energy storage device, and the solar cell supplements energy not less than the energy consumed by the device; for scenarios with unfavorable illumination conditions, i.e., the rest hours, the energy consumed by the solar-powered electronic paper display (in either the operating state or the standby state) is also supplied by the energy storage device; at this time, the solar cell cannot supplement sufficient energy to offset the energy loss of the energy storage device; afterwards, when the illumination condition returns to a favorable state, i.e., when the office is reopened, the solar cell normally supplies power to the energy storage device; as a result, while meeting the real-time energy consumption of the solar-powered electronic paper display, the solar cell can also supplement the energy consumed by the solar-powered electronic paper display during the period of unfavorable illumination conditions, so as to realize energy self-consistency of the entire solar-powered electronic paper display. Under non-ideal operating conditions, such as when the solar-powered electronic paper display device is placed in a dark environment for a long time or the light intensity is too weak to support the energy self-consistency of the whole device, or when short-time rapid charging of the solar-powered electronic paper display is required (corresponding scenarios include the solar-powered electronic paper display being left in a dark corner, or the office being closed for a long time without illumination during long holidays), the charge level of the energy storage device needs to be quickly replenished to rapidly recover the operating capacity of the solar-powered electronic paper display; a handheld terminal such as a mobile phone with an NFC function may be brought close to the solar-powered electronic paper display, and a rapid wireless charging process can be realized via an NFC communication link. In other scenarios, for instance, when the handheld terminal needs to send a specific instruction to the solar-powered electronic paper display or obtain certain information from the electronic product, a handheld terminal such as a mobile phone with an NFC function may also be brought close to the solar-powered electronic paper display to perform information transmission via the NFC communication link.

FIG. 13 illustrates a schematic structural diagram (top view) of a solar-powered electronic paper display device according to another embodiment of the present disclosure. In the present embodiment, the solar assembly has a rectangular structure, and indium tin oxide is adopted as the transparent conductive layer. An organic solar cell is employed in the present embodiment, and its functional layer structure from the transparent conductive layer 302 toward the electrode layer 304 sequentially includes an electron transport layer, a light absorption layer and a hole transport layer. Copper (Cu) is adopted for the electrode layer 304. Considering that the main application scenarios of the product are indoor environments, the cover plate is formed by combining a 3M water and oxygen barrier film with UV adhesive. The first division 306 is formed via laser etching to cut the transparent conductive layer 302, with a pitch of 40 µm. The second division 307 is formed via laser etching to cut the solar cell functional layer 303, with a pitch of 75 µm. The third division 308 is formed via laser etching to cut the solar cell functional layer 303 and the electrode layer 304, with a pitch of 100 µm. The fourth division 309 is formed via laser etching to separate the transparent conductive layer 302, the solar cell functional layer 303 and the electrode layer 304 of the solar cell from an edge, with a pitch of 100 µm. The first electrode 310 is a total electrode of the internally cascaded solar cell and configured to connect the electrode of the solar cell to an external circuit, and serves as the positive electrode of the solar cell in the present embodiment. The second electrode 311 serves as the negative electrode of the solar cell. The third electrode 312 serves as the positive electrode of the NFC antenna. The fourth electrode 313 serves as the negative electrode of the NFC antenna. The first electrode 310, the second electrode 311, the third electrode 312 and the fourth electrode 313 adopt the same preparation process and materials as the electrode layer 304. For example, the four electrodes may be prepared via vacuum evaporation with a film thickness of 100 nm.

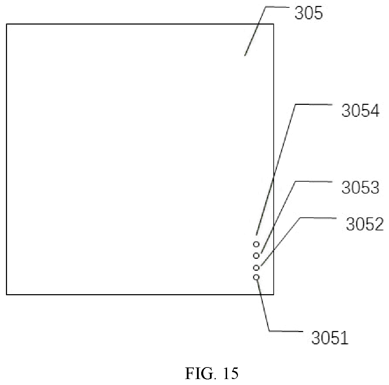

FIG. 14 illustrates a schematic diagram of an internally cascaded structure of a solar cell according to another embodiment of the present disclosure, and specifically a top view of the first electrode 310, the second electrode 311, the third electrode 312, the fourth electrode 313 and the electrode layer 304. In the present embodiment, the first electrode 310 serves as the positive electrode, and the second electrode 311 serves as the negative electrode. In the present embodiment, in order to concentrate the lead-out positions of the solar assembly electrodes on one side for connection to an external circuit, etching of the fourth division 309 is performed. The first electrode 310 extends from the left side as illustrated to below the second electrode 311 on the right side of the solar cell, so that wiring space can be saved during subsequent circuit connection. The third electrode 312 serves as the positive electrode of the NFC antenna, and the fourth electrode 313 serves as the negative electrode. The line width of the second electrode layer 3042 in the present embodiment is 3 mm. The fourth electrode layer 3044 is an inactive region partitioned by the fourth division 309, which contributes neither to the solar cell nor to the NFC antenna. The solar cell and the NFC antenna, along with their respective electrodes, are separated by the fourth division 309 formed via laser etching. The fourth division 309 provides reliable electrical insulation between the circuits. Accordingly, even though the two circuits are densely laid out, they do not interfere with each other, achieving a realizing high space utilization efficiency. The solar cell and the NFC antenna are subsequently encapsulated by the cover plate 305. The encapsulation material covers the whole solar cell and fills the etched trenches of the third division 308 and the fourth division 309 to isolate water vapor and oxygen. Laser drilling is performed at the positions where the four electrodes extend outward to expose the electrodes, and these electrodes can then be connected to an external circuit via silver paste dispensing, lead soldering, physical contact or other equivalent means. FIG. 15 illustrates a schematic structural diagram of a cover plate according to another embodiment of the present disclosure. In the present embodiment, the cover plate 305 adopts a combination of a 3M water and oxygen barrier film and UV adhesive for encapsulation. After the deposition of the electrode layer 304 and the formation of the third division 308 and the fourth division 309, UV adhesive is coated, then the 3M water and oxygen barrier film is laminated thereon, and ultraviolet irradiation curing is subsequently carried out to complete the encapsulation of the solar cell module. All through holes are formed via laser drilling.

In the embodiments of the present disclosure, the types of solar cells may include rigid or flexible organic solar cells, perovskite solar cells, dye-sensitized solar cells, amorphous silicon solar cells, copper indium gallium selenide solar cells, cadmium telluride solar cells, copper zinc tin sulfide solar cells, quantum dot solar cells, tandem solar cells, and the like. The types of energy storage batteries may include lithium titanate batteries, lithium iron phosphate batteries, ternary lithium batteries, lithium-ion capacitors, sodium-ion batteries, and the like. The circuit board may be a flexible printed circuit, a rigid circuit board, or a combination thereof. The transparent cover plate 2 is not mandatory. If the solar cell and the electronic paper display have sufficient mechanical strength, the transparent cover plate may be omitted or disposed only in specific regions. Each component in the system-in-package chip mentioned in the present disclosure may be partially or fully implemented with discrete devices to mount each functional module onto the circuit board according to actual structural design requirements. In practical application of the present disclosure, the four electrodes may be arranged as required. For example, the electrodes may be deposited after the solar cell functional layer is removed (in this case, the electrodes achieve superior electrical conductivity). The illustrated schematic diagram of the internally cascaded structure of the solar cell shows only one type of internal circuit of the solar cell, and other circuit layouts may be designed according to actual requirements. The opening holes formed in the encapsulation cover plate provide passages for electrical connection between the internal and external circuits of the solar assembly. After the internal and external circuits are connected, the drilled holes can be filled by glue pouring or the like to further improve the encapsulation performance of the solar assembly. The number of coil turns and the coil width of the NFC antenna can be adjusted correspondingly to meet specific near-field communication requirements. The shape of solar cell described in the present disclosure can be of various forms, and a custom shape can be adopted for specific application demands.

In summary, the device according to the embodiments of the present disclosure has the following advantageous effects.
1) The present disclosure firstly proposes integrating an NFC antenna with a solar cell in the Internet of Things field, which eliminates the large circuit board area originally required for preparing an independent NFC antenna, thereby greatly improving space utilization efficiency and significantly cutting circuit board costs.
2) The NFC coil preparation method proposed in the present disclosure avoids layout design of high-cost circuit boards. It is only necessary to pattern the electrodes outside the effective power generation area of the solar cell via laser etching, which requires simple processes and achieves higher utilization efficiency of internal space and electrode materials (excess electrode film layers conventionally need to be removed via edge cleaning or the like during the production of solar cell modules), so that the NFC antenna can be prepared at low cost.
3) Since the NFC antenna proposed by the present disclosure is integrated with the solar cell, it is generally disposed above or on one side of the electronic paper display device. The position of the NFC antenna well avoids circuit structures inside the circuit board and the electronic paper display (e.g., TFTs), so that signal interference from these structures can be prevented. In addition, the physical communication distance when an NFC terminal approaches the NFC antenna is optimized, thereby improving NFC communication performance.
4) The present disclosure adopts an energy management system to manage the solar cell, the NFC antenna and the energy storage device. Different from the conventional energy management systems which take primary batteries as power sources or merely adopt solar cells as power sources, the solution of the present disclosure performs energy transmission around the energy storage device, which significantly expands the applicable scenarios of electronic products. On the basis of the present disclosure, by calculating power consumption of loads under different scenarios and selecting appropriate solar cells and energy storage devices, and matching with the NFC antenna, electronic products can achieve long-term sustainable operation without various limitations of primary batteries and operate normally in various occasions. The energy management mode provided by the present disclosure possesses universal applicability.
5) The NFC antenna solution proposed by the present disclosure can adopt a laser etching process, and the required etching pattern is programmed in a laser device. After completing a third division process, the solar cell can pass a fourth division process area in an assembly line mode, and etching can be finished within several seconds, which is far shorter than the manufacturing time in conventional processes. The NFC antenna is then encapsulated together with the solar cell, which can effectively block the erosion of water vapor, oxygen, etc., well protect the coils of the NFC antenna and greatly extend the service life of products.
6) The present disclosure proposes forming drilled holes on the encapsulation cover plate, and each hole corresponds to one electrode on the solar assembly. This structure enables the internal circuits of the solar assembly (including the solar cell circuit and the NFC circuit) to communicate with external circuits while isolating the internal structures of the solar assembly from the external environment. Further, after conductive paths are formed between the internal and external circuits, the drilled holes can be filled by glue pouring or the like to further block the ingress of water vapor and oxygen, so as to comprehensively improve the encapsulation performance of the solar assembly.
7) The present disclosure proposes performing system-in-package on the NFC module, the MCU module and the like, which are then mounted on the circuit board. Circuits of the solar cell and the NFC antenna are also connected to the circuit board via a flexible printed circuit (FPC). A pouch energy storage device is adopted in the embodiments. All these designs enable a more compact stacking structure of the electronic paper display device and provide a feasible scheme for thinning and light-weight design.
8) The present disclosure provides several types of internally cascaded structures of the solar cell, i.e., connection modes of sub-cells, including examples of equal-area and unequal-area segmentations for reference, which have instructive significance and practical application value.

The above specific embodiments further make detailed illustrations to the objectives, technical solutions and advantageous effects of the present disclosure. It should be understood that those described above are only specific embodiments of the present disclosure and are not intended to limit the protection scope thereof. Any modification, equivalent substitution or improvement made within the spirit and principle of the present disclosure should fall within the protection scope of the present disclosure.

## Claims

1. A solar-powered electronic paper display device, comprising a solar assembly (3), an electronic paper module (4), a circuit board (5), a system-in-package chip (6) and an energy storage device (7), wherein the system-in-package chip (6) integrates and encapsulates a Microcontroller Unit (MCU) module and a Near Field Communication (NFC) module;
the solar assembly (3) integrates both a solar cell and an NFC antenna, wherein the NFC antenna is prepared by using an electrode outside an effective power generation area of the solar cell;
visible areas of the solar assembly (3) and the electronic paper module (4) do not block each other;
the solar assembly (3) is configured to collect and convert solar energy into electrical power; the circuit board (5) is configured to receive an electronic paper display instruction sent by an external system and forward the electronic paper display instruction to the MCU module; collect the electrical power transmitted from the solar cell and store the electrical power in the energy storage device, or collect alternating-current electrical power transmitted from the NFC antenna and send the alternating-current electrical power to the NFC module (6); and deliver the electrical power from the energy storage device to the electronic paper module and the system-in-package chip (6) according to a power consumption requirement;
the NFC module is configured to convert the alternating-current electrical power into direct-current electrical power and store the direct-current electrical power in the energy storage device (7);
the MCU module is configured to parse commodity information in the electronic paper display instruction and send the commodity information to the electronic paper module (4);
the electronic paper module (4) is configured to display the received commodity information; and
the energy storage device (7) is configured to store electrical power.

2. The device according to claim 1, further comprising an energy management system (8);
the circuit board (5) is specifically configured to transmit the electrical power transmitted from the solar cell to the energy management system (8);
the NFC module is specifically configured to transmit the direct-current electrical power to the energy management system (8);
the energy management system (8) comprises a converter, a voltage regulator, a safety monitoring module and a charging controller,
the converter is configured to convert the electrical power according to an energy storage requirement of the energy storage device, wherein the conversion is a boost conversion or a buck conversion;
the voltage regulator is configured to stabilize the converted electrical power and transmit the stabilized electrical power to the energy storage device (7);
the safety monitoring module is configured to perform safety monitoring on the electrical power input to the energy management system (8); and
the charging controller is configured to protect internal circuits of the energy storage device (7) and the energy management system (8), wherein the protection comprises one or any combination of overcharge prevention, overdischarge prevention and reverse current prevention.

3. The device according to claim 1, wherein the solar cell comprises:
a substrate (301) configured to support and protect the solar cell and allow light to pass therethrough;
a cover plate (305) configured to protect the solar cell;
a solar cell functional layer (303) configured to generate electric energy by absorbing light energy;
a transparent conductive layer (302) configured to transmit the electric energy of the solar cell;
a first electrode layer (3041) configured to transmit the electric energy of the solar cell, wherein the first electrode layer (3041) is a part of an electrode layer (304);
a first division (306) configured to cut the transparent conductive layer (302) via laser etching;
a second division (307) configured to cut the solar cell functional layer (303) via laser etching;
a third division (308) configured to cut the solar cell functional layer (303) and the electrode layer (304) via laser etching or mechanical scribing;
a fourth division (309) configured to separate the transparent conductive layer (302), the solar cell functional layer (303) and the electrode layer (304) from an edge via laser etching or mechanical scribing; and
a first electrode (310) and a second electrode (311) which serve as total electrodes of the internally cascaded solar cell and configured to connect the solar cell to the circuit board (5), wherein the first electrode (310) and the second electrode (311) have opposite polarities.

4. The device according to claim 3, wherein the solar cell further comprises:
a third electrode layer (3043) configured to transmit the electrical power of the solar cell; and
an area of the first electrode layer (3041) is twice that of the third electrode layer (3043).

5. The device according to claim 1, wherein the NFC antenna comprises:
a second electrode layer (3042) which serves as a coil portion of the NFC antenna and configured to perform near-field coupling communication; and
a third electrode (312) and a fourth electrode (313) which serves as a positive electrode or a negative electrode of the NFC antenna, wherein the third electrode (312) and the fourth electrode (313) have opposite polarities.

6. The device according to claim 5, wherein the second electrode layer (3042) is a multi-turn coil.

7. The device according to claim 1, wherein the NFC antenna is prepared by using a laser etching process on the electrode outside the effective power generation area of the solar cell, and an etching pattern required for the laser etching process is programmed in a laser device.

8. The device according to claim 2, wherein the circuit board (5) is connected to the solar assembly (3) and the electronic paper module (4) via a flexible printed circuit respectively, and is connected to the energy storage device (7), the energy management system (8) and the system-in-package chip (6).

9. The device according to claim 1, further comprising a housing (1);
the housing (1) is configured to support the device, wherein a first face of the housing (1) directly faces illumination, and the first face is empty or provided with a transparent cover plate (2); and
when provided, the transparent cover plate (2) is connected to the first face of the housing via adhesive bonding or snap-fit connection, and is configured to protect the solar assembly (3) and the electronic paper module (4).

10. The device according to claim 9, wherein the cover plate (305) is provided with drilled holes, and each of the drilled hole is positioned corresponding to one of the electrodes of the solar assembly (3).

11. The device according to claim 9, wherein the cover plate (305) is provided with a first through hole (3051), a second through hole (3052), a third through hole (3053) and a fourth through hole (3054), wherein
the first through hole (3051) is configured as a passage for the first electrode (310) to the circuit board (5);
the second through hole (3052) is configured as a passage for the second electrode (311) to the circuit board (5);
the third through hole (3053) is configured as a passage for the third electrode (312) to the circuit board (5); and
the fourth through hole (3054) is configured as a passage for the fourth electrode (313) to the circuit board (5).
